# EUROPEAN PATENT SPECIFICATION

(11) **EP 3 076 386 B1**
(45) Date of publication and mention of the grant of the patent: **03.06.2020**
(21) Application number: 13900207.5
(22) Date of filing: 23.12.2013
(51) Int. Cl.: G09G 5/00

(54) **IMAGE DISPLAY METHOD AND USER TERMINAL**
BILDANZEIGEVERFAHREN UND BENUTZERENDGERÄT
PROCÉDÉ D'AFFICHAGE D'IMAGES, ET TERMINAL D'UTILISATEUR

(43) Date of publication of application: 05.10.2016
(73) Proprietor: Huawei Device Co., Ltd., Dongguan, Guangdong 523808 (CN)
(72) Inventor: GAO, Wenmei, Shenzhen, Guangdong 518129 (CN)
(74) Representative: Epping - Hermann - Fischer
(86) International application number: PCT/CN2013/090251
(87) International publication number: WO 2015/096015

(56) References cited:
- EP-A2- 1 976 271
- EP-A2- 2 271 078
- CN-A- 101 118 734
- CN-A- 101 673 535
- CN-A- 103 236 042
- US-A1- 2006 204 057
- US-A1- 2010 060 665

## Description

### TECHNICAL FIELD

The present invention relates to the field of image processing, and in particular, to a photograph displaying method and a user terminal.

### BACKGROUND

The rapid development of science and technologies results in increasing popularity of intelligent terminals, for example, smart PADs and smartphones are steadily on the rise, and almost everyone has an intelligent terminal. Hardware performance of such existing intelligent terminals becomes increasingly high, and particularly, camera lenses are of higher specifications, and imaging quality is also increasingly high. Most users are fond of using a smartphone to take photographs, which is convenient, and the photographs are also easy to browse.

When a user browses a photograph album in a mobile phone, because some of taken photographs are in a landscape mode and some are in a portrait mode, the user needs to frequently rotate the mobile phone to switch between a landscape mode and a portrait mode, or frequently double-tap a screen or pinch open by using two fingers to zoom in a photograph for viewing. As a result, a speed at which the user browses photographs is affected, thereby degrading user experience.

US 2010/0060665 A1 discloses a method for adjusting image displayed on an electronic apparatus. The method includes the step of: obtaining and comparing the aspect ratios of the to-be-displayed image and the display, determining whether the aspect ratio of the to-be-displayed image matches the aspect ratio of the display; adjusting the to-be-displayed image if the aspect ratio of the to-be-displayed image does not match the aspect ratio of the display; displaying the adjusted image in full screen.

EP 2271078 A2 discloses an image displaying apparatus which includes: a display unit that displays an image, and which has a horizontal width and a vertical width; an image processing unit which processes the image; and a controller which controls the image processing unit, if an aspect ratio of the image is different from an aspect ratio of the display unit, to extend the image in a first direction until a horizontal width or a vertical width of the image becomes identical to any one of the horizontal width and the vertical width of the display unit, to extend the image in a second direction to maintain the aspect ratio of the image, and to move the extended image in the second direction on the display unit.

EP 1976271 A2 discloses a portable terminal and a method for displaying an image using focus information. An interested area of the captured subject image can be rapidly displayed on the display. The captured subject image can be displayed on the display, according to the features of an interested area image. At least one interested area is extracted from the captured subject image. When one of the extracted interested areas is selected, image information of the captured subject, which includes focus information of the selected interested area, is generated. When requesting that the captured subject image is displayed, an interested area image of the captured subject image is displayed according to focus information of the generated image information.

### SUMMARY

Embodiments of the present invention provide a photograph displaying method and a user terminal as defined in the claims, which can automatically display a photograph in full screen, thereby improving user experience in fast picture browsing.

To achieve the foregoing objective, the following technical solutions are used in the embodiments, and are defined by the appended claims.

According to the photograph displaying method and the user terminal that are provided in the foregoing technical solutions, if a screen display mode of the user terminal does not match a shooting mode of a to-be-displayed photograph, an aspect ratio of the to-be-displayed photograph is kept, and the to-be-displayed photograph is zoomed in to full screen for displaying on a display screen, where a width of a photograph displayed on the display screen is equal to a width of the display screen, or a height of a photograph displayed on the display screen is equal to a height of the display screen. In the prior art, when a screen display mode does not match a shooting mode, a user needs to rotate a mobile phone to switch between a landscape mode and a portrait mode, or frequently double-tap a screen or pinch open by using two fingers to zoom in a photograph for viewing. In comparison with the prior art, in the method provided in the present invention, photographs can be automatically displayed in full screen, thereby improving user experience in fast picture browsing.

### BRIEF DESCRIPTION OF DRAWINGS

FIG. 1 is a schematic flowchart of a photograph displaying method according to Embodiment 1 of the present invention;
FIG. 2 is a schematic diagram of two photograph displaying scenarios in the prior art when a user terminal is in a portrait display mode;
FIG. 3 is a schematic diagram of two photograph displaying scenarios in the prior art when a user terminal is in a landscape display mode;
FIG. 4 is a schematic flowchart of a photograph displaying method according to Embodiment 2 of the present invention;
FIG. 5 is a schematic diagram of an intermediate processing procedure of the photograph displaying method according to Embodiment 2 of the present invention;
FIG. 6 is a schematic diagram of displaying of a zoomed-in photograph according to Embodiment 2 of the present invention;
FIG. 7 is a schematic diagram of displaying of a gradually zoomed-in photograph according to Embodiment 2 of the present invention;
FIG. 8 is a schematic diagram of photograph displaying according to Embodiment 2 of the present invention; and
FIG. 9 is a structural block diagram of a user terminal according to Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

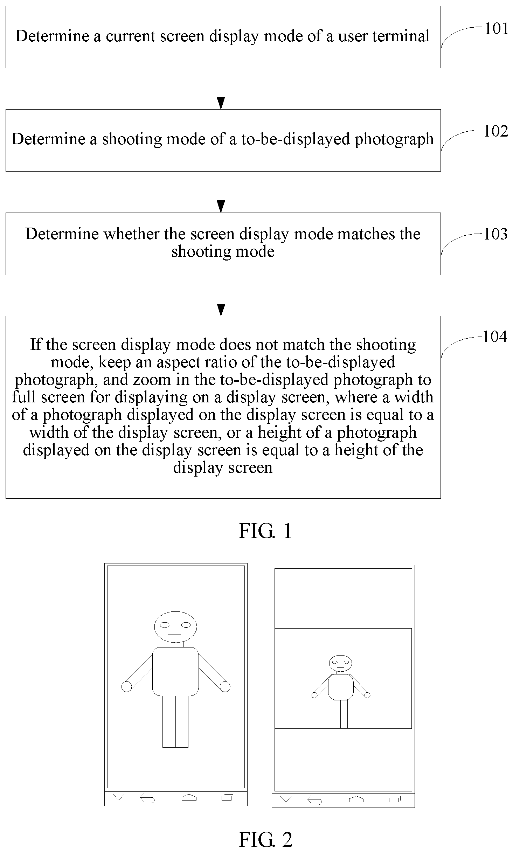

This embodiment of the present invention provides a photograph displaying method. As shown in FIG. 1, the method includes the following steps:
101: Determine a current screen display mode of a user terminal.

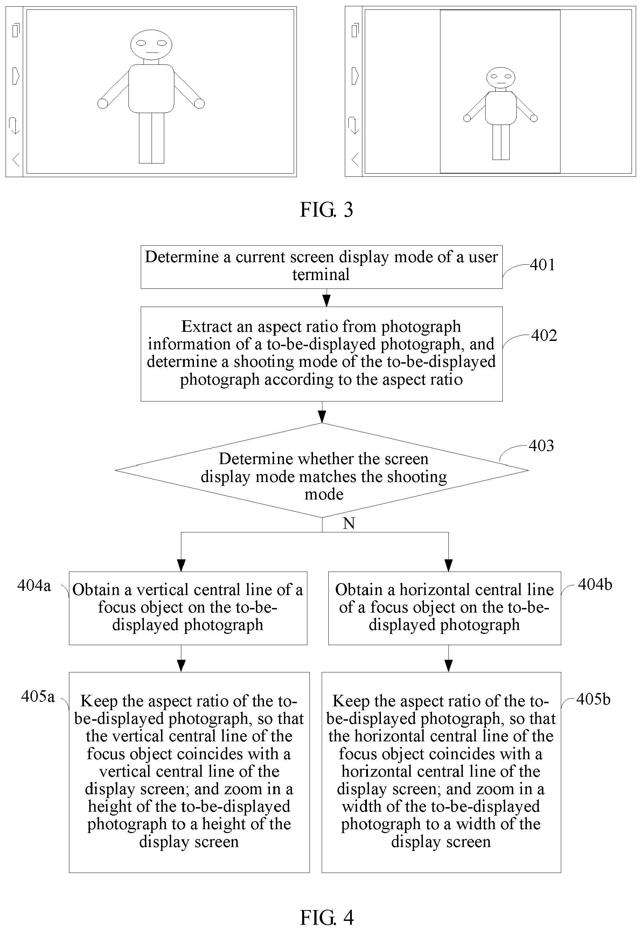

The user terminal supports two screen display modes: one is a portrait display mode and the other is a landscape display mode. Exemplarily, for two user terminals shown in FIG. 2, this kind of screen display mode in which left and right sides, relative to a line of sight of a user, of the user terminals are long sides of the user terminals is referred to as a portrait display mode; for two user terminals shown in FIG. 3, this kind of screen display mode in which left and right sides, relative to a line of sight of a user, of the user terminals are short sides of the user terminals is referred to as a landscape display mode.

102: Determine a shooting mode of a to-be-displayed photograph.

There are also two shooting modes for a photograph: one is a horizontal shooting mode and the other is a vertical shooting mode.

Optionally, the user terminal may extract an aspect ratio from photograph information of the to-be-displayed photograph, and determine the shooting mode of the to-be-displayed photograph according to the aspect ratio. If a width is greater than a height, it is determined that the shooting mode is a horizontal shooting mode; or if a height is greater than a width, it is determined that the shooting mode is a vertical shooting mode.

103: Determine whether the screen display mode matches the shooting mode.

In a case in which it is determined that the screen display mode is a portrait display mode, if it is determined that the shooting mode is a vertical shooting mode, it is then determined that the screen display mode matches the shooting mode; or if it is determined that the shooting mode is a horizontal shooting mode, it is then determined that the screen display mode does not match the shooting mode.

In a case in which it is determined that the screen display mode is a landscape display mode, if it is determined that the shooting mode is a horizontal shooting mode, it is then determined that the screen display mode matches the shooting mode; or if it is determined that the shooting mode is a vertical shooting mode, it is then determined that the screen display mode does not match the shooting mode.

104: If the screen display mode does not match the shooting mode, keep an aspect ratio of the to-be-displayed photograph, and zoom in the to-be-displayed photograph to full screen for displaying on a display screen, where a width of a photograph displayed on the display screen is equal to a width of the display screen, or a height of a photograph displayed on the display screen is equal to a height of the display screen.

If it is determined in step 103 that the screen display mode matches the shooting mode, it indicates that the to-be-displayed photograph is displayed on the display screen in full screen, as shown in a left diagram of FIG. 2 or a left diagram of FIG. 3. In this case, the user terminal directly displays the to-be-displayed photograph.

If it is determined in step 103 that the screen display mode does not match the shooting mode, it indicates that the to-be-displayed photograph cannot be displayed on the display screen in full screen, as shown in a right diagram of FIG. 2 or a right diagram of FIG. 3. In this case, the user terminal keeps the aspect ratio of the to-be-displayed photograph, and zooms in the to-be-displayed photograph to full screen for displaying on the display screen, where the width of the photograph displayed on the display screen is equal to the width of the display screen, or the height of the photograph displayed on the display screen is equal to the height of the display screen.

According to the photograph displaying method provided in this embodiment of the present invention, if a screen display mode of a user terminal does not match a shooting mode of a to-be-displayed photograph, an aspect ratio of the to-be-displayed photograph is kept, and the to-be-displayed photograph is zoomed in to full screen for displaying on a display screen, where a width of a photograph displayed on the display screen is equal to a width of the display screen, or a height of a photograph displayed on the display screen is equal to a height of the display screen. In the prior art, when a screen display mode does not match a shooting mode, a user needs to rotate a mobile phone to switch between a landscape mode and a portrait mode, or frequently double-tap a screen or pinch open by using two fingers to zoom in a photograph for viewing. In comparison with the prior art, in the method provided in the present invention, photographs can be automatically displayed in full screen, thereby improving user experience in fast picture browsing.

### Embodiment 2

This embodiment of the present invention provides a photograph displaying method. As shown in FIG. 4, the method includes the following steps:
401: Determine a current screen display mode of a user terminal.

The user terminal supports two screen display modes: one is a portrait display mode and the other is a landscape display mode. Exemplarily, for two user terminals shown in FIG. 2, this kind of screen display mode in which left and right sides, relative to a line of sight of a user, of the user terminals are vertical sides of the user terminals is referred to as a portrait display mode; for two user terminals shown in FIG. 3, this kind of screen display mode in which left and right sides, relative to a line of sight of a user, of the user terminals are horizontal sides of the user terminals is referred to as a landscape display mode.

402: Extract an aspect ratio from photograph information of a to-be-displayed photograph, and determine a shooting mode of the to-be-displayed photograph according to the aspect ratio.

Generally, the aspect ratio of the photograph is stored in the photograph information, for example, 3264 (width) x 1840 (height), or 1840 (width) x 3264 (height). If a width is greater than a height, it is determined that the shooting mode is a horizontal shooting mode; otherwise, it is determined that the shooting mode is a vertical shooting mode. Exemplarily, if the aspect ratio is 3264 (width) x 1840 (height), it is determined that the shooting mode is a horizontal shooting mode; or if the aspect ratio is 3264 (height) x 1840 (width), it is determined that the shooting mode is a vertical shooting mode.

403: Determine whether the screen display mode matches the shooting mode.

Exemplarily, FIG. 2 and FIG. 3 show scenarios in the prior art in which user terminals normally display photographs. In scenarios shown in FIG. 2, the user terminal may determine that the screen display mode of the user terminal is a vertical display mode. In a scenario shown in a left diagram of FIG. 2, a height of a photograph displayed on the user terminal is greater than a width of the photograph, and the shooting mode is a vertical shooting mode; in this case, the user terminal determines that the screen display mode matches the shooting mode. In a scenario shown in a right diagram of FIG. 2, a width of a photograph displayed on the user terminal is greater than a height of the photograph, and the shooting mode is a horizontal shooting mode; in this case, the user terminal determines that the screen display mode does not match the shooting mode.

In scenarios shown in FIG. 3, the user terminal may determine that the screen display mode of the user terminal is a horizontal display mode. In a scenario shown in a left diagram of FIG. 3, a width of a photograph displayed on the user terminal is greater than a height of the photograph, and the shooting mode is a horizontal shooting mode; in this case, the user terminal determines that the screen display mode matches the shooting mode. In a scenario shown in a right diagram of FIG. 3, a height of a photograph displayed on the user terminal is greater than a width of the photograph, and the shooting mode is a vertical shooting mode; in this case, the user terminal determines that the screen display mode does not match the shooting mode.

Same as that in the prior art, if the screen display mode matches the shooting mode, the user terminal can directly display the to-be-displayed photograph normally, as shown in the left diagram of FIG. 2 or the left diagram of FIG. 3.

If the screen display mode does not match the shooting mode, two cases shown in a right diagram of FIG. 2 and a right diagram of FIG. 3 may occur:
Case 1, shown in FIG. 2: In a case in which it is determined that the screen display mode is a portrait display mode, and the shooting mode is a horizontal shooting mode, the following steps are executed:
404a: Obtain a vertical central line of a focus object on the to-be-displayed photograph.

Herein, there are two methods for obtaining the vertical central line of the focus object on the to-be-displayed photograph:
One method is to obtain the vertical central line of the focus object according to step S1 to step S3:
S1: Identify a profile curve of the focus object on the to-be-displayed photograph.
S2: Determine four points, on the profile curve of the focus object, closest to four sides of the display screen, and then separately draw, through the four points, lines that are parallel to the four sides of the display screen, thereby determining a rectangular frame in which the focus object on the to-be-displayed photograph is located.
S3: Use a vertical central line of the rectangular frame as the vertical central line of the focus object.

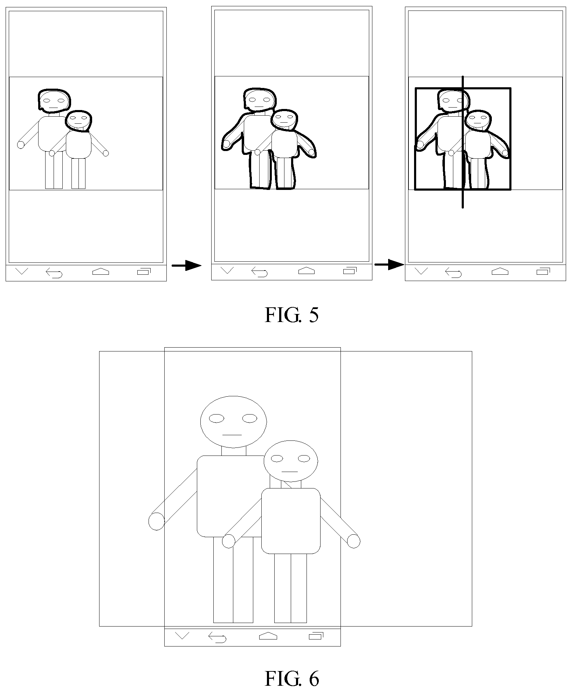

A photograph of people in which people is a focus object is used as an example. A procedure shown in FIG. 5 is used for description: First, a human face is recognized (this belongs to the prior art and details are not described herein again), where there may be one or more human faces in the photograph (recognition of multiple human faces is supported in the prior art; and two human faces are shown in FIG. 5); and then, an approximate location of a human body is determined based on a location of the human face, and a contour of the human body is further outlined. A specific algorithm may be a pattern recognition algorithm widely used in the industry: A group of human contour samples are trained, and sample matching is performed on an approximate location of people in a photograph, so as to determine a contour of a human body. If there are multiple people in a photograph, a big circle is used to outline the multiple people to obtain a profile curve of a focus object.

Certainly, for a photograph of an animal or a photograph with an obvious focus object, a profile curve of a focus object may also be obtained by using a similar method.

Four points, on the profile curve of the focus object, closest to four sides of the display screen are determined, and then lines that are parallel to the four sides of the display screen are separately drawn through the four points, thereby determining a rectangular frame in which the focus object on the to-be-displayed photograph is located. A vertical central line of the rectangular frame is used as the vertical central line of the focus object.

Alternatively, after identifying the focus object on the to-be-displayed photograph, the user terminal may directly determine a rectangular frame of the focus object according to the identified focus object.

The other method is as follows: Before the current screen display mode of the user terminal is determined, and after the focus object on the to-be-displayed photograph is identified, a rectangular frame of the focus object is already directly determined according to the identified focus object; or a rectangular frame of the focus object on the photograph is obtained according to step S1 to step S2, and then a vertical central line of a rectangular frame of a horizontally shot photograph is stored, in photograph information of the photograph, as a vertical central line of a focus object on the horizontally shot photograph, and a horizontal central line of a rectangular frame of a vertically shot photograph is stored, in photograph information of the photograph, as a horizontal central line of a focus object on the vertically shot photograph.

It should be noted herein that, in this method, a field of the photograph information needs to be extended, and a private field is added to store information about the vertical central line. Optionally, for example, central-line-type and central-line-offset may be added, where a value of central-line-type may be horizontal or vertical, and a value of central-line-offset may be a pixel value from a horizontal central line to an upper edge of a screen or a pixel value from a vertical central line to a left edge of a screen.

When a user browses a photograph, step 404a may be: directly extracting the vertical central line from the photograph information of the to-be-displayed photograph. This method can ensure that a delay effect does not occur (especially on a user terminal with a relatively low CPU speed) when the user browses the photograph.

405a: Keep the aspect ratio of the to-be-displayed photograph, so that the vertical central line of the focus object coincides with a vertical central line of a display screen; and zoom in a height of the to-be-displayed photograph to a height of the display screen.

Exemplarily, as shown in FIG. 6, FIG. 6 shows a photograph that is obtained after the photograph in FIG. 5 is zoomed in according to step 405a. An aspect ratio of the photograph that is finally displayed on the display screen is the same as that of the original photograph, the vertical central line of the focus object coincides with the vertical central line of the display screen, and a height of the photograph is equal to the height of the display screen. A panorama of the photograph can be viewed by dragging the photograph leftward and rightward on the display screen.

Case 2: In a case in which it is determined that the screen display mode is a landscape display mode, and the shooting mode is a vertical shooting mode, the following steps are executed:
404b: Obtain a horizontal central line of a focus object on the to-be-displayed photograph.

Herein, there are two methods for obtaining the horizontal central line of the focus object on the to-be-displayed photograph:
One method is to obtain the horizontal central line according to step Q1 to step Q3:
Q1: Identify a profile curve of the focus object on the to-be-displayed photograph.
Q2: Determine four points, on the profile curve of the focus object, closest to four sides of the display screen, and then separately draw, through the four points, lines that are parallel to the four sides of the display screen, thereby determining a rectangular frame in which the focus object on the to-be-displayed photograph is located.
Q3: Use a horizontal central line of the rectangular frame as the horizontal central line of the focus object.

For a specific process, reference may be made to step S1 to step S3, and details are not described herein again.

Alternatively, after identifying the focus object on the to-be-displayed photograph, the user terminal may directly determine a rectangular frame of the focus object according to the identified focus object.

The other method is as follows: Before the current screen display mode of the user terminal is determined, and after the focus object on the to-be-displayed photograph is identified, a rectangular frame of the focus object is already directly determined according to the identified focus object; or a rectangular frame of the focus object on the photograph is obtained according to step Q1 to step Q2, and then a vertical central line of a rectangular frame of a horizontally shot photograph is stored, in photograph information of the photograph, as a vertical central line of a focus object on the horizontally shot photograph, and a horizontal central line of a rectangular frame of the vertically shot photograph is stored, in photograph information of the photograph, as a horizontal central line of a focus object on the vertically shot photograph. For a method for storing the vertical central line and the horizontal central line of the rectangular frame, refer to descriptions in step 404a.

When a user browses a photograph, step 404b may be: directly extracting the horizontal central line from the photograph information of the to-be-displayed photograph. This method can ensure that a delay effect does not occur (especially on a user terminal with a relatively low CPU speed) when the user browses the photograph.

405b: Keep the aspect ratio of the to-be-displayed photograph, so that the horizontal central line of the focus object coincides with a horizontal central line of the display screen; and zoom in a width of the to-be-displayed photograph to a width of the display screen.

An aspect ratio of a photograph that is finally displayed on the display screen is the same as that of the original photograph, the horizontal central line of the focus object coincides with the horizontal central line of the display screen, and a width of the photograph is equal to the width of the display screen. A panorama of the photograph can be viewed by dragging the photograph upward and downward on the display screen.

It should be noted herein that, "vertical" and "horizontal" in the vertical central line and horizontal central line that are mentioned above are relative to the user terminal, where a direction of long sides of the user terminal is a vertical direction, and a direction of short sides is a horizontal direction.

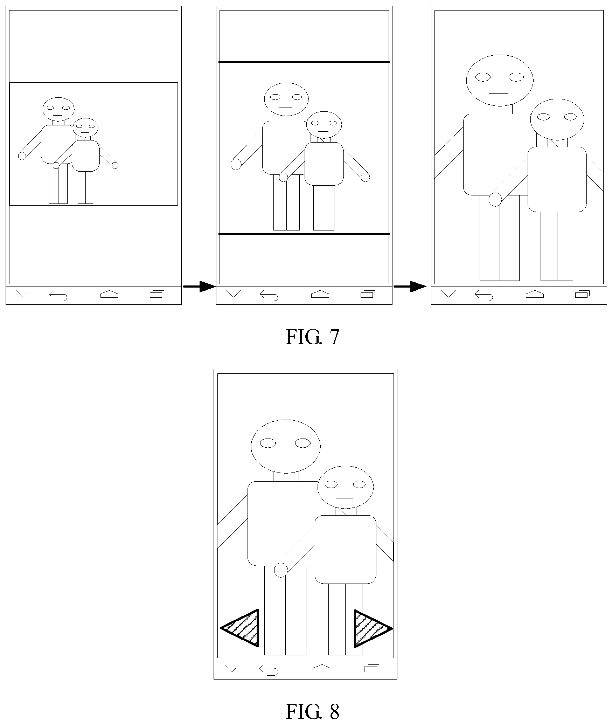

Optionally, before a zoomed-in effect is displayed, an original effect of a photograph may be displayed for a short time (for example, 0.5s); then, the photograph is zoomed in to full screen in a gradual manner. In this way, a user can know that this photograph is horizontally shot and is automatically zoomed in by a system. A specific displaying process may be shown in FIG. 7.

Optionally, as shown in FIG. 8, in a zoomed-in effect, virtual buttons (previous and next) are displayed on a screen, so that the a user can easily browse previous and next photographs by tapping the buttons. If a user does not tap the virtual buttons, the user can drag a photograph leftward and rightward to view a panorama.

### Embodiment 3

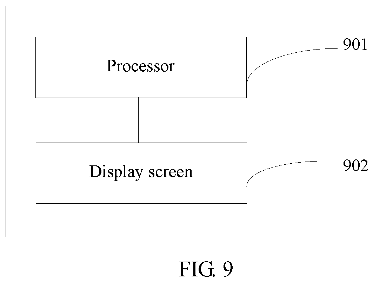

This embodiment of the present invention further provides a user terminal, configured to implement the photograph displaying method of Embodiment 1 and Embodiment 2. As shown in FIG. 9, the user terminal includes a processor 901 and a display screen 902.

The processor 901 is configured to: determine a current screen display mode of the user terminal and a shooting mode of a to-be-displayed photograph; then determine whether the screen display mode matches the shooting mode; and when it is determined that the screen display mode does not match the shooting mode, keep an aspect ratio of the to-be-displayed photograph, and zoom in the to-be-displayed photograph.

Optionally, the processor 901 is specifically configured to extract an aspect ratio from photograph information of the to-be-displayed photograph, and determine the shooting mode of the to-be-displayed photograph according to the aspect ratio.

Optionally, the processor 901 is specifically configured to:
if it is determined that the screen display mode is a portrait display mode, when it is determined that the shooting mode is a vertical shooting mode, determine that the screen display mode matches the shooting mode; or when it is determined that the shooting mode is a horizontal shooting mode, determine that the screen display mode does not match the shooting mode; or
if it is determined that the screen display mode is a landscape display mode, when it is determined that the shooting mode is a horizontal shooting mode, determine that the screen display mode matches the shooting mode; or when it is determined that the shooting mode is a vertical shooting mode, determine that the screen display mode does not match the shooting mode.

The display screen 902 is configured to display a zoomed-in photograph, where the zoomed-in photograph is displayed on the display screen 902 in full screen, and a width of the zoomed-in photograph is equal to a width of the display screen 902, or a height of the zoomed-in photograph is equal to a height of the display screen 902.

Optionally, the processor 901 is specifically configured to: obtain a vertical central line of a focus object on the to-be-displayed photograph if it is determined that the screen display mode is a portrait display mode and the shooting mode is a horizontal shooting mode; then keep the aspect ratio of the to-be-displayed photograph, so that the vertical central line of the focus object coincides with a vertical central line of the display screen 902; and zoom in a height of the to-be-displayed photograph to the height of the display screen 902.

Optionally, the processor 901 is specifically configured to: obtain a horizontal central line of a focus object on the to-be-displayed photograph if it is determined that the screen display mode is a landscape display mode and the shooting mode is a vertical shooting mode; then keep the aspect ratio of the to-be-displayed photograph, so that the horizontal central line of the focus object coincides with a horizontal central line of the display screen 902; and zoom in a width of the to-be-displayed photograph to the width of the display screen 902.

Optionally, the processor 901 is specifically configured to: identify the focus object on the to-be-displayed photograph, and directly determine a rectangular frame of the focus object according to the identified focus object; and use a vertical central line of the rectangular frame as the vertical central line of the focus object, and use a horizontal central line of the rectangular frame as the horizontal central line of the focus object.

Optionally, the processor 901 is specifically configured to: identify a profile curve of the focus object on the to-be-displayed photograph; determine four points, on the profile curve of the focus object, closest to four sides of the display screen 902, and then separately draw, through the four points, lines that are parallel to the four sides of the display screen 902, thereby determining a rectangular frame in which the focus object on the to-be-displayed photograph is located; and use a vertical central line of the rectangular frame as the vertical central line of the focus object, and use a horizontal central line of the rectangular frame as the horizontal central line of the focus object.

Optionally, the processor 901 is further configured to: before determining the current screen display mode of the user terminal, for a photograph in a photograph album, identify a focus object on the photograph, and directly determine a rectangular frame of the focus object according to the identified focus object; or identify a profile curve of a focus object on the photograph, determine four points, on the profile curve of the focus object, closest to four sides of the display screen 902, and then separately draw, through the four points, lines that are parallel to the four sides of the display screen 902, thereby determining a rectangular frame in which the focus object on the photograph is located; and store, in photograph information of a horizontally shot photograph, a vertical central line of a rectangular frame of the horizontally shot photograph as a vertical central line of a focus object on the horizontally shot photograph, and store, in photograph information of the vertically shot photograph, a horizontal central line of a rectangular frame of the vertically shot photograph as a horizontal central line of a focus object on the vertically shot photograph; and
the processor 901 is specifically configured to directly extract the horizontal central line or the vertical central line from the photograph information of the to-be-displayed photograph.

A person of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A photograph displaying method, comprising:
determining a current screen display mode of a user terminal;
determining a shooting mode of a to-be-displayed photograph;
determining whether the screen display mode matches the shooting mode; and
if the screen display mode does not match the shooting mode, keeping an aspect ratio of the to-be-displayed photograph, and zooming in the to-be-displayed photograph to full screen for displaying on a display screen, wherein a width of a photograph displayed on the display screen is equal to a width of the display screen, or a height of a photograph displayed on the display screen is equal to a height of the display screen wherein the determining whether the screen display mode matches the shooting mode comprises:
if it is determined that the screen display mode is a portrait display mode, when it is determined that the shooting mode is a vertical shooting mode, determining that the screen display mode matches the shooting mode; or when it is determined that the shooting mode is a horizontal shooting mode, determining that the screen display mode does not match the shooting mode; or
if it is determined that the screen display mode is a landscape display mode, when it is determined that the shooting mode is a horizontal shooting mode, determining that the screen display mode matches the shooting mode; or when it is determined that the shooting mode is a vertical shooting mode, determining that the screen display mode does not match the shooting mode,
wherein if it is determined that the screen display mode is a portrait display mode and the shooting mode is a horizontal shooting mode, the keeping an aspect ratio of the to-be-displayed photograph, and zooming in the to-be-displayed photograph to full screen for displaying on a display screen comprises:
obtaining a vertical central line of a focus object on the to-be-displayed photograph; and
keeping the aspect ratio of the to-be-displayed photograph, so that the vertical central line of the focus object coincides with a vertical central line of the display screen; and zooming in a height of the to-be-displayed photograph to the height of the display screen, wherein the vertical central line of the focus object is a vertical central line of a rectangular frame of the focus object;
wherein if it is determined that the screen display mode is a landscape display mode and the shooting mode is a vertical shooting mode, the keeping an aspect ratio of the to-be-displayed photograph, and zooming in the to-be-displayed photograph to full screen for displaying on a display screen comprises:
obtaining a horizontal central line of a focus object on the to-be-displayed photograph; and
keeping the aspect ratio of the to-be-displayed photograph, so that the horizontal central line of the focus object coincides with a horizontal central line of the display screen; and zooming in a width of the to-be-displayed photograph to the width of the display screen, wherein the horizontal central line of the focus object is a horizontal central line of the rectangular frame of the focus object;
wherein the obtaining a vertical central line or a horizontal central line of a focus object on the to-be-displayed photograph comprises:
identifying a profile curve of the focus object on the to-be-displayed photograph;
determining four points, on the profile curve of the focus object, closest to four sides of the display screen, and then separately drawing, through the four points, lines that are parallel to the four sides of the display screen, thereby determining the rectangular frame in which the focus object on the to-be-displayed photograph is located; and
using a vertical central line of the rectangular frame as the vertical central line of the focus object, and using a horizontal central line of the rectangular frame as the horizontal central line of the focus object.

2. The method according to claim 1, wherein the determining a shooting mode of a to-be-displayed photograph comprises:
extracting the aspect ratio from photograph information of the to-be-displayed photograph, and determining the shooting mode of the to-be-displayed photograph according to the aspect ratio.

3. A user terminal, comprising:
a processor (901), configured to: determine a current screen display mode of the user terminal and a shooting mode of a to-be-displayed photograph; then determine whether the screen display mode matches the shooting mode; and when it is determined that the screen display mode does not match the shooting mode, keep an aspect ratio of the to-be-displayed photograph, and zoom in the to-be-displayed photograph; and
a display screen (902), configured to display a zoomed-in photograph, wherein the zoomed-in photograph is displayed on the display screen in full screen, and a width of the zoomed-in photograph is equal to a width of the display screen, or a height of the zoomed-in photograph is equal to a height of the display screen.
wherein
the processor (901) is specifically configured to:
if it is determined that the screen display mode is a portrait display mode, when it is determined that the shooting mode is a vertical shooting mode, determine that the screen display mode matches the shooting mode; or when it is determined that the shooting mode is a horizontal shooting mode, determine that the screen display mode does not match the shooting mode; or
if it is determined that the screen display mode is a landscape display mode, when it is determined that the shooting mode is a horizontal shooting mode, determine that the screen display mode matches the shooting mode; or when it is determined that the shooting mode is a vertical shooting mode, determine that the screen display mode does not match the shooting mode,
wherein
the processor (901) is specifically configured to: obtain a vertical central line of a focus object on the to-be-displayed photograph if it is determined that the screen display mode is a portrait display mode and the shooting mode is a horizontal shooting mode; then keep the aspect ratio of the to-be-displayed photograph, so that the vertical central line of the focus object coincides with a vertical central line of the display screen (902); and zoom in a height of the to-be-displayed photograph to the height of the display screen (902), wherein the vertical central line of the focus object is a vertical central line of a rectangular frame of the focus object;
wherein the processor (901) is specifically configured to: obtain a horizontal central line of a focus object on the to-be-displayed photograph if it is determined that the screen display mode is a landscape display mode and the shooting mode is a vertical shooting mode; then keep the aspect ratio of the to-be-displayed photograph, so that the horizontal central line of the focus object coincides with a horizontal central line of the display screen (902); and zoom in a width of the to-be-displayed photograph to the width of the display screen (902), wherein the horizontal central line of the focus object is a horizontal central line of the rectangular frame of the focus object;
wherein the processor is specifically configured to: identify a profile curve of the focus object on the to-be-displayed photograph; determine four points, on the profile curve of the focus object, closest to four sides of the display screen, and then separately draw, through the four points, lines that are parallel to the four sides of the display screen (902), thereby determining the rectangular frame in which the focus object on the to-be-displayed photograph is located; and use a vertical central line of the rectangular frame as the vertical central line of the focus object, and use a horizontal central line of the rectangular frame as the horizontal central line of the focus object.

4. The user terminal according to claim 3, wherein the processor (901) is specifically configured to: extract the aspect ratio from photograph information of the to-be-displayed photograph, and determine the shooting mode of the to-be-displayed photograph according to the aspect ratio.

## Patentansprüche

1. Fotoanzeigeverfahren, umfassend:
Bestimmen eines aktuellen Bildschirmanzeigemodus eines Benutzerendgeräts;
Bestimmen eines Aufnahmemodus eines anzuzeigenden Fotos;
Bestimmen, ob der Bildschirmanzeigemodus mit dem Aufnahmemodus übereinstimmt; und
falls der Bildschirmanzeigemodus nicht mit dem Aufnahmemodus übereinstimmt, Halten eines Aspektverhältnisses des anzuzeigenden Fotos, und Vergrößern des anzuzeigenden Fotos auf volle Bildschirmgröße zum Anzeigen auf einem Anzeigebildschirm, wobei eine Breite eines auf dem Anzeigebildschirm angezeigten Fotos gleich einer Breite des Anzeigebildschirms ist, oder eine Höhe eines auf dem Anzeigebildschirm angezeigten Fotos gleich einer Höhe des Anzeigebildschirms ist, wobei das Bestimmen, ob der Bildschirmanzeigemodus mit dem Aufnahmemodus übereinstimmt, Folgendes umfasst:
falls bestimmt wird, dass der Bildschirmanzeigemodus ein Porträtanzeigemodus ist, wenn bestimmt wird, dass der Aufnahmemodus ein vertikaler Aufnahmemodus ist, Bestimmen, dass der Bildschirmanzeigemodus mit dem Aufnahmemodus übereinstimmt; oder wenn bestimmt wird, dass der Aufnahmemodus ein horizontaler Aufnahmemodus ist, Bestimmen, dass der Bildschirmanzeigemodus nicht mit dem Aufnahmemodus übereinstimmt; oder
falls bestimmt wird, dass der Bildschirmanzeigemodus ein Landschaftsanzeigemodus ist, wenn bestimmt wird, dass der Aufnahmemodus ein horizontaler Aufnahmemodus ist, Bestimmen, dass der Bildschirmanzeigemodus mit dem Aufnahmemodus übereinstimmt; oder wenn bestimmt wird, dass der Aufnahmemodus ein vertikaler Aufnahmemodus ist, Bestimmen, dass der Bildschirmanzeigemodus nicht mit dem Aufnahmemodus übereinstimmt,
wobei, falls bestimmt wird, dass der Bildschirmanzeigemodus ein Porträtanzeigemodus ist und der Aufnahmemodus ein horizontaler Aufnahmemodus ist, das Halten eines Aspektverhältnisses des anzuzeigenden Fotos und das Vergrößern des anzuzeigenden Fotos auf volle Bildschirmgröße zum Anzeigen auf einem Anzeigebildschirm Folgendes umfasst:
Erhalten einer vertikalen Mittellinie eines Fokusobjekts auf dem anzuzeigenden Foto; und
Halten des Aspektverhältnisses des anzuzeigenden Fotos, sodass die vertikale Mittellinie des Fokusobjekts mit einer vertikalen Mittellinie des Anzeigebildschirms zusammenfällt; und Vergrößern einer Höhe des anzuzeigenden Fotos auf die Höhe des Anzeigebildschirms, wobei die vertikale Mittellinie des Fokusobjekts eine vertikale Mittellinie eines rechteckigen Rahmens des Fokusobjekts ist;
wobei, falls bestimmt wird, dass der Bildschirmanzeigemodus ein Landschaftsanzeigemodus ist und der Aufnahmemodus ein vertikaler Aufnahmemodus ist, das Halten eines Aspektverhältnisses des anzuzeigenden Fotos und das Vergrößern des anzuzeigenden Fotos auf volle Bildschirmgröße zum Anzeigen auf einem Anzeigebildschirm Folgendes umfasst:
Erhalten einer horizontalen Mittellinie eines Fokusobjekts auf dem anzuzeigenden Foto; und
Halten des Aspektverhältnisses des anzuzeigenden Fotos, sodass die horizontale Mittellinie des Fokusobjekts mit einer horizontalen Mittellinie des Anzeigebildschirms zusammenfällt; und Vergrößern einer Breite des anzuzeigenden Fotos auf die Breite des Anzeigebildschirms, wobei die horizontale Mittellinie des Fokusobjekts eine horizontale Mittellinie des rechteckigen Rahmens des Fokusobjekts ist;
wobei das Erhalten einer vertikalen Mittellinie oder einer horizontalen Mittellinie eines Fokusobjekts auf dem anzuzeigenden Foto Folgendes umfasst:
Identifizieren einer Profilkurve des Fokusobjekts auf dem anzuzeigenden Foto;
Bestimmen von vier Punkten, auf der Profilkurve des Fokusobjekts, die vier Seiten des Anzeigebildschirms am nächsten sind, und dann separates Ziehen, durch die vier Punkte, von Linien, die parallel zu den vier Seiten des Anzeigebildschirms sind, wodurch der rechteckige Rahmen bestimmt wird, in dem sich das Fokusobjekt auf dem anzuzeigenden Foto befindet; und
Verwenden einer vertikalen Mittellinie des rechteckigen Rahmens als die vertikale Mittellinie des Fokusobjekts, und Verwenden einer horizontalen Mittellinie des rechteckigen Rahmens als die horizontale Mittellinie des Fokusobjekts.

2. Verfahren nach Anspruch 1, wobei das Bestimmen eines Aufnahmemodus eines anzuzeigenden Fotos Folgendes umfasst:
Extrahieren des Aspektverhältnisses aus Fotoinformationen des anzuzeigenden Fotos, und Bestimmen des Aufnahmemodus des anzuzeigenden Fotos gemäß dem Aspektverhältnis.

3. Benutzerendgerät, umfassend:
einen Prozessor (901), der für Folgendes konfiguriert ist: Bestimmen eines aktuellen Bildschirmanzeigemodus des Benutzerendgeräts und eines Aufnahmemodus eines anzuzeigenden Fotos; dann Bestimmen, ob der Bildschirmanzeigemodus mit dem Aufnahmemodus übereinstimmt; und wenn bestimmt wird, dass der Bildschirmanzeigemodus nicht mit dem Aufnahmemodus übereinstimmt, Halten eines Aspektverhältnisses des anzuzeigenden Fotos, und Vergrößern des anzuzeigenden Fotos; und
einen Anzeigebildschirm (902), der konfiguriert ist, um ein vergrößertes Foto anzuzeigen, wobei das vergrößerte Foto auf dem Anzeigebildschirm in voller Bildschirmgröße angezeigt wird, und eine Breite des vergrößerten Fotos gleich einer Breite des Anzeigebildschirms ist, oder eine Höhe des vergrößerten Fotos gleich einer Höhe des Anzeigebildschirms ist,
wobei
der Prozessor (901) insbesondere für Folgendes konfiguriert ist:
falls bestimmt wird, dass der Bildschirmanzeigemodus ein Porträtanzeigemodus ist, wenn bestimmt wird, dass der Aufnahmemodus ein vertikaler Aufnahmemodus ist, Bestimmen, dass der Bildschirmanzeigemodus mit dem Aufnahmemodus übereinstimmt; oder wenn bestimmt wird, dass der Aufnahmemodus ein horizontaler Aufnahmemodus ist, Bestimmen, dass der Bildschirmanzeigemodus nicht mit dem Aufnahmemodus übereinstimmt; oder
falls bestimmt wird, dass der Bildschirmanzeigemodus ein Landschaftsanzeigemodus ist, wenn bestimmt wird, dass der Aufnahmemodus ein horizontaler Aufnahmemodus ist, Bestimmen, dass der Bildschirmanzeigemodus mit dem Aufnahmemodus übereinstimmt; oder wenn bestimmt wird, dass der Aufnahmemodus ein vertikaler Aufnahmemodus ist, Bestimmen, dass der Bildschirmanzeigemodus nicht mit dem Aufnahmemodus übereinstimmt,
wobei
der Prozessor (901) insbesondere für Folgendes konfiguriert ist: Erhalten einer vertikalen Mittellinie eines Fokusobjekts auf dem anzuzeigenden Foto, falls bestimmt wird, dass der Bildschirmanzeigemodus ein Porträtanzeigemodus ist und der Aufnahmemodus ein horizontaler Aufnahmemodus ist; dann Halten des Aspektverhältnisses des anzuzeigenden Fotos, sodass die vertikale Mittellinie des Fokusobjekts mit einer vertikalen Mittellinie des Anzeigebildschirms (902) zusammenfällt; und Vergrößern einer Höhe des anzuzeigenden Fotos auf die Höhe des Anzeigebildschirms (902), wobei die vertikale Mittellinie des Fokusobjekts eine vertikale Mittellinie eines rechteckigen Rahmens des Fokusobjekts ist;
wobei der Prozessor (901) insbesondere für Folgendes konfiguriert ist: Erhalten einer horizontalen Mittellinie eines Fokusobjekts auf dem anzuzeigenden Foto, falls bestimmt wird, dass der Bildschirmanzeigemodus ein Landschaftsanzeigemodus ist und der Aufnahmemodus ein vertikaler Aufnahmemodus ist; dann Halten des Aspektverhältnisses des anzuzeigenden Fotos, sodass die horizontale Mittellinie des Fokusobjekts mit einer horizontalen Mittellinie des Anzeigebildschirms (902) zusammenfällt; und Vergrößern einer Breite des anzuzeigenden Fotos auf die Breite des Anzeigebildschirms (902), wobei die horizontale Mittellinie des Fokusobjekts eine horizontale Mittellinie des rechteckigen Rahmens des Fokusobjekts ist;
wobei der Prozessor insbesondere für Folgendes konfiguriert ist: Identifizieren einer Profilkurve des Fokusobjekts auf dem anzuzeigenden Foto; Bestimmen von vier Punkten, auf der Profilkurve des Fokusobjekts, die vier Seiten des Anzeigebildschirms am nächsten sind, und dann separates Ziehen, durch die vier Punkte, von Linien, die parallel zu den vier Seiten des Anzeigebildschirms (902) sind, wodurch der rechteckige Rahmen bestimmt wird, in dem sich das Fokusobjekt auf dem anzuzeigenden Foto befindet; und Verwenden einer vertikalen Mittellinie des rechteckigen Rahmens als die vertikale Mittellinie des Fokusobjekts, und Verwenden einer horizontalen Mittellinie des rechteckigen Rahmens als die horizontale Mittellinie des Fokusobjekts.

4. Benutzerendgerät nach Anspruch 3, wobei der Prozessor (901) insbesondere für Folgendes konfiguriert ist: Extrahieren des Aspektverhältnisses aus Fotoinformationen des anzuzeigenden Fotos, und Bestimmen des Aufnahmemodus des anzuzeigenden Fotos gemäß dem Aspektverhältnis.

## Revendications

1. Procédé d'affichage de photographie, comprenant :
la détermination d'un mode d'affichage d'écran en cours d'un terminal d'utilisateur ;
la détermination d'un mode de prise de vue d'une photographie à afficher ;
la détermination du fait que le mode d'affichage d'écran correspond ou non au mode de prise de vue ; et
si le mode d'affichage d'écran ne correspond pas au mode de prise de vue, le maintien d'un facteur de forme de la photographie à afficher, et l'agrandissement de la photographie à afficher en plein écran pour un affichage sur un écran d'affichage, dans lequel une largeur d'une photographie affichée sur l'écran d'affichage est égale à une largeur de l'écran d'affichage, ou une hauteur d'une photographie affichée sur l'écran d'affichage est égale à une hauteur de l'écran d'affichage dans lequel la détermination du fait que le mode d'affichage d'écran correspond ou non au mode de prise de vue comprend :
s'il est déterminé que le mode d'affichage d'écran est un mode d'affichage portrait, lorsqu'il est déterminé que le mode de prise de vue est un mode de prise de vue verticale, la détermination du fait que le mode d'affichage d'écran correspond au mode de prise de vue ; ou lorsqu'il est déterminé que le mode de prise de vue est un mode de prise de vue horizontale, la détermination du fait que le mode d'affichage d'écran ne correspond pas au mode de prise de vue ; ou
s'il est déterminé que le mode d'affichage d'écran est un mode d'affichage paysage, lorsqu'il est déterminé que le mode de prise de vue est un mode de prise de vue horizontale, la détermination du fait que le mode d'affichage d'écran correspond au mode de prise de vue ; ou lorsqu'il est déterminé que le mode de prise de vue est un mode de prise de vue verticale, la détermination du fait que le mode d'affichage d'écran ne correspond pas au mode de prise de vue, dans lequel s'il est déterminé que le mode d'affichage d'écran est un mode d'affichage portrait et que le mode de prise de vue est un mode de prise de vue horizontale, le maintien d'un facteur de forme de la photographie à afficher, et l'agrandissement de la photographie à afficher en plein écran pour un affichage sur un écran d'affichage comprend :
l'obtention d'une ligne centrale verticale d'un objet de mise au point sur la photographie à afficher ; et
le maintien du facteur de forme de la photographie à afficher, de sorte que la ligne centrale verticale de l'objet de mise au point coïncide avec une ligne centrale verticale de l'écran d'affichage ; et l'agrandissement d'une hauteur de la photographie à afficher à la hauteur de l'écran d'affichage, dans lequel la ligne centrale verticale de l'objet de mise au point est une ligne centrale verticale d'un cadre rectangulaire de l'objet de mise au point ;
lorsqu'il est déterminé que le mode d'affichage d'écran est un mode d'affichage paysage et que le mode de prise de vue est un mode de prise de vue verticale, le maintien d'un rapport de forme de la photographie à afficher, et l'agrandissement de la photographie à afficher en plein écran pour un affichage sur un écran d'affichage comprend :
l'obtention d'une ligne centrale horizontale d'un objet de mise au point sur la photographie à afficher ; et
le maintien d'un facteur de forme de la photographie à afficher, de sorte que la ligne centrale horizontale de l'objet de mise au point coïncide avec une ligne centrale horizontale de l'écran d'affichage ; et l'agrandissement d'une largeur de la photographie à afficher à la largeur de l'écran d'affichage, dans lequel la ligne centrale horizontale de l'objet de mise au point est une ligne centrale horizontale du cadre rectangulaire de l'objet de mise au point ;
dans lequel l'obtention d'une ligne centrale verticale ou d'une ligne centrale horizontale d'un objet de mise au point sur la photographie à afficher comprend :
l'identification d'une courbe de profil de l'objet de mise au point sur la photographie à afficher ;
la détermination de quatre points, sur la courbe de profil de l'objet de mise au point, les plus proches de quatre côtés de l'écran d'affichage, puis le traçage séparé, en passant par les quatre points, de lignes qui sont parallèles aux quatre côtés de l'écran d'affichage, pour ainsi déterminer le cadre rectangulaire dans lequel l'objet de mise au point sur la photographie à afficher est situé ; et
l'utilisation d'une ligne centrale verticale du cadre rectangulaire en tant que ligne centrale verticale de l'objet de mise au point, et l'utilisation d'une ligne centrale horizontale du cadre rectangulaire en tant que ligne centrale horizontale de l'objet de mise au point.

2. Procédé selon la revendication 1, dans lequel la détermination d'un mode de prise de vue d'une photographie à afficher comprend :
l'extraction du facteur de forme à partir d'informations de photographie de la photographie à afficher, et la détermination du mode de prise de vue de la photographie à afficher selon le facteur de forme.

3. Terminal d'utilisateur, comprenant :
un processeur (901), configuré pour : déterminer un mode d'affichage d'écran en cours du terminal d'utilisateur et un mode de prise de vue d'une photographie à afficher ; puis déterminer si le mode d'affichage d'écran correspond au mode de prise de vue ; et lorsqu'il est déterminé que le mode d'affichage d'écran ne correspond pas au mode de prise de vue, maintenir un facteur de forme de la photographie à afficher, et agrandir la photographie à afficher ; et
un écran d'affichage (902), configuré pour afficher une photographie agrandie, dans lequel la photographie agrandie est affichée sur l'écran d'affichage en plein écran, et une largeur de la photographie agrandie est égale à une largeur de l'écran d'affichage, ou une hauteur de la photographie agrandie est égale à une hauteur de l'écran d'affichage,
dans lequel
le processeur (901) est spécifiquement configuré pour :
s'il est déterminé que le mode d'affichage d'écran est un mode d'affichage portrait, lorsqu'il est déterminé que le mode de prise de vue est un mode de prise de vue verticale, déterminer que le mode d'affichage d'écran correspond au mode de prise de vue ; ou lorsqu'il est déterminé que le mode de prise de vue est un mode de prise de vue horizontale, déterminer que le mode d'affichage d'écran ne correspond pas au mode de prise de vue ; ou
s'il est déterminé que le mode d'affichage d'écran est un mode d'affichage paysage, lorsqu'il est déterminé que le mode de prise de vue est un mode de prise de vue horizontale, déterminer que le mode d'affichage d'écran correspond au mode de prise de vue ; ou lorsqu'il est déterminé que le mode de prise de vue est un mode de prise de vue verticale, déterminer que le mode d'affichage d'écran ne correspond pas au mode de prise de vue,
dans lequel
le processeur (901) est spécifiquement configuré pour : obtenir une ligne centrale verticale d'un objet de mise au point sur la photographie à afficher s'il est déterminé que le mode d'affichage d'écran est un mode d'affichage portrait et que le mode de prise de vue est un mode de prise de vue horizontale ; puis maintenir le facteur de forme de la photographie à afficher, de sorte que la ligne centrale verticale de l'objet de mise au point coïncide avec une ligne centrale verticale de l'écran d'affichage (902) ; et agrandir une hauteur de la photographie à afficher à la hauteur de l'écran d'affichage (902), dans lequel la ligne centrale verticale de l'objet de mise au point est une ligne centrale verticale d'un cadre rectangulaire de l'objet de mise au point ;
dans lequel le processeur (901) est spécifiquement configuré pour : obtenir une ligne centrale horizontale d'un objet de mise au point sur la photographie à afficher s'il est déterminé que le mode d'affichage d'écran est un mode d'affichage paysage et que le mode de prise de vue est un mode de prise de vue verticale ; puis maintenir le facteur de forme de la photographie à afficher, de sorte que la ligne centrale horizontale de l'objet de mise au point coïncide avec une ligne centrale horizontale de l'écran d'affichage (902) ; et agrandir une largeur de la photographie à afficher à la largeur de l'écran d'affichage (902), dans lequel la ligne centrale horizontale de l'objet de mise au point est une ligne centrale horizontale du cadre rectangulaire de l'objet de mise au point ;
dans lequel le processeur est spécifiquement configuré pour : identifier une courbe de profil de l'objet de mise au point sur la photographie à afficher ; déterminer quatre points, sur la courbe de profil de l'objet de mise au point, les plus proches de quatre côtés de l'écran d'affichage, puis tracer séparément, en passant par les quatre points, des lignes qui sont parallèles aux quatre côtés de l'écran d'affichage (902), pour ainsi déterminer le cadre rectangulaire dans lequel l'objet de mise au point sur la photographie à afficher est situé ; et utiliser une ligne centrale verticale du cadre rectangulaire en tant que ligne centrale verticale de l'objet de mise au point, et utiliser une ligne centrale horizontale du cadre rectangulaire en tant que ligne centrale horizontale de l'objet de mise au point.

4. Terminal d'utilisateur selon la revendication 3, dans lequel le processeur (901) est spécifiquement configuré pour : extraire le facteur de forme à partir d'informations de photographie de la photographie à afficher, et déterminer le mode de prise de vue de la photographie à afficher selon le facteur de forme.
